# EUROPÄISCHE PATENTSCHRIFT

(11) **EP 0 915 315 B1**
(45) Veröffentlichungstag und Bekanntmachung des Hinweises auf die Patenterteilung: **16.01.2002**
(21) Anmeldenummer: 98119131.5
(22) Anmeldetag: 09.10.1998
(51) Int. Cl.: F41H 5/04, B32B 17/10

(54) **Panzerglasscheibe mit Metalleinlage**
Armoured glass with metal insert
Vitre blindée munie d'un insert d'une feuille métallique

(30) Priorität: 13.10.1997 DE 19745248
(43) Veröffentlichungstag der Anmeldung: 12.05.1999
(73) Patentinhaber: Isoclima GmbH, 81377 München (DE)
(72) Erfinder: Wöll, Herwig, 74343 Sachsenheim (DE)
(74) Vertreter: Seitz, Ralf, Dipl.-Ing.

(56) Entgegenhaltungen:
- EP-A- 0 528 354
- WO-A-97/07377
- DE-A- 3 320 157
- DE-A- 4 006 709
- DE-A- 4 142 416
- DE-A- 4 415 879
- US-A- 3 974 359
- US-A- 4 277 294
- US-A- 4 817 347

## Beschreibung

Die Erfindung betrifft eine Panzerglasscheibe mit Metalleinlage gemäß dem Oberbegriff von Anspruch 1, wobei die Panzerglasscheibe in Kraftfahrzeugen zum Schutz der Insassen des Kraftfahrzeugs gegen Beschuss von außen verwendet wird.

In der US 4,277,294 ist eine Fenstereinheit für ein Flugzeug beschrieben, die einen vorstehenden oder vorspringenden Metallrahmen mit Befestigungsöffnungen, eine Metalleinlage, die randseitig bündig mit dem Metallrahmen endet, eine äußere Glasscheibe, eine mittlere Glasscheibe, die größer als die äußere Glasscheibe ist, und eine Zwischenschicht, z.B. aus Polyurethan, zwischen der äußeren und der mittleren Glasscheibe aufweist. Die Metalleinlage ist in der Zwischenschicht eingebettet.

Die US-A-3,974,359 beschreibt ein laminiertes Flugzeugfenster; das eine äußere Abdeckplatte aus Glas, eine innere Druckplatte aus Glas und eine dicke Zwischenschicht zwischen der Abdeckplatte und der Druckplatte aus Polyvinylbutyral oder Polyurethankunststoff hat. In die Zwischenschicht ist ein verstärkender Rahmen aus Metall eingebettet. Die innere Druckplatte steht über die äußere Abdeckplatte hervor. Der verstärkende Rahmen in der Zwischenschicht dient zur Schraubbefestigung des Flugzeugfensters im Fensterrahmen des Flugzeugs.

Die WO 97/07377 beschreibt ein leichtgewichtiges, gepanzertes Fahrzeug mit einem Panzerglasfenster aus mehreren Glasscheiben, die am Rand bündig abschließen. Der Rand ist mit einer Randkappe mit kompliziertem Profil vollständig gefasst, die mit einer abstehenden Lippe in die Aufnahme des originalen Fensterrahmens des Automobils eingreift oder einpasst und mit einer Urethanschicht am stirnseitigen Rand der Glasscheiben gehalten ist.

In der DE 33 20 157 A1 ist ein versenkbares Kraftfahrzeugtürfenster beschrieben, das eine einfache Autoglasscheibe hat, an der ein metallisches Halteelement mittels einer Einkomponenten-Polyurethan-Klebemasse befestigt ist.

Die EP 0 528 354 A1 beschreibt ein beschusshemmendes Isolierglaselement für Fassaden- und Wandkonstruktionen, bei dem mehrere miteinander verbundene Einzelscheiben zur Bildung einer beschusshemmenden Glasebene vorgesehen sind, wobei eine beschusshemmende Beplankung auf die randseitige Stirnseite der Einzelscheiben mit z.B. Epoxydharz-Kleber, Silikon oder Polysulfid aufgeklebt ist.

In der DE 40 06 709 A1 ist eine Panzerglasscheibe beschrieben, die aus mehreren, flächig verbundenen Glasscheiben besteht und die eine außenliegende Glasschicht hat, die gegenüber weiter innenliegenden Glasschichten mit einem Vorsprung oder Rücksprung endet, wobei nur die innenliegenden Glasschichten in einem Scheibenrahmen eingeklebt sind, der die Panzerglasscheibe an der Fahrzeugkarosserie festlegt.

Die US 4,817,347 beschreibt ein schlagfestes Fenster für ein Flugzeug, das mit Hilfe eines thermoplastischen Polyurethans als Klebestreifen an dem Fensterrahmen des Flugzeugs befestigt ist.

In der den Oberbegriff bildenden DE 44 15 879 A1 ist ein Kraftfahrzeug mit einer Tür beschrieben, in der eine solche aus Panzerglas bestehende Fensterscheibe eingebaut ist, die in einem an die Fensterscheibe angepassten, im Querschnitt U-förmigen Türfensterrahmen als Karosserierahmen Röhenverlagerbar geführt ist. Die Fensterscheibe hat an einem oberen Umgfangsabschnitt und an den beïden seitlichen Umfangsabschnitten eine zur Scheibeninnenseite verlaufende Randstufe in der ein L-förmig gestaltetes beschußhemmendes Panzerelement aufgeklebt ist.

In der Offenlegungsschrift DE 41 42 416 A1 wird eine aus Panzerglas bestehende Fensterscheibe zur Verwendung in einem Kraftfahrzeug beschrieben. An ihren Stirnflächen bzw. Randbereichen ist die Panzerscheibe aus Gründen der Anpassung der Panzerscheibe an den Rahmen des Kraftfahrzeugs abgestuft. Im Bereich der Abstufung ist die Panzerglasscheibe mit einem z.B. aus Stahlblech bestehenden Panzerelement als Metalleinlage versehen, durch das das Eindringen eines im Bereich der abgestuften Stirnflächen z.B. schrägwinklig auftreffenden Geschoßes in den Fahrzeuginnenraum verhindert wird.

Bei der Herstellung der bekannten Panzerglasscheibe wird das Stahlblech auf die Stirnseitenflächen der Panzerscheibe aufgeklebt. Es hat sich nun herausgestellt, daß diese Klebeverbindung zwischen Stahlblech und Glas die hohen Qualitätsanforderungen bezüglich Standfestigkeit und Dauerhaftigkeit nicht erfüllt. Dies wird insbesondere auf die unterschiedlichen, thermisch bedingten Ausdehnungen von Glas auf der einen Seite und Stahl auf der anderen Seite zurückgeführt. Bedenkt man, daß im Automobilbau ein Temperaturbereich von etwa - 20 °C bis + 80 °C anzusetzen ist, wirken auf die Kleberschicht bzw. die Klebeverbindung durch die thermische Ausdehnung von Glas und Stahl hohe Spannungen ein, denen die bekannte Klebeschicht nicht dauerhaft standhält, vielmehr kann es sogar zur Ablösung des Stahlblechs von der Glasoberfläche kommen.

Die Aufgabe der vorliegenden Erfindung besteht darin, eine Panzerglasscheibe mit Metalleinlage anzugeben, bei der die Metalleinlage am Glas der Panzerglasscheibe dauerhaft angebracht ist.

Diese Aufgabe wird durch die Panzerglasscheibe gemäß Anspruch 1 gelöst. Zweckmäßige Weiterbildungen der Erfindung sind Gegenstand der abhängigen Ansprüche. Demnach umfaßt die erfindungsgemäße Panzerglasscheibe, die insbesondere in einem Kraftfahrzeug verwendet werden kann, mindestens eine Glasscheibe und eine Metalleinlage, wobei die Metalleinlage in einem Randbereich der Panzerglasscheibe an der Glasscheibe mit Polyurethan befestigt ist.

Die Anbringung der Metalleinlage an einem Glasabschnitt oder einer Glasscheibe der Panzerglasscheibe mit Polyurethan führt überraschenderweise, auch wenn die erfindungsgemäße Panzerglasscheibe den z.B. im Automobil auftretenden großen Temperaturschwankungen ausgesetzt ist, zu der gewünschten dauerhaften und zuverlässigen Befestigung der Metalleinlage am Glas. Unerwüschte Ablösungen der Metalleinlage vom Glas, wie es bei den oben erwähnten Panzerglasscheiben des Stands der Technik (vgl. DE-A-4 415 879 und DE-A-4 142 416) beobachtet wurde, treten bei der erfindungsgemäßen Panzerglasscheibe aufgrund der Verwendung von Polyurethan als Verbindungsschicht zwischen Metalleinlage und Glas nicht mehr auf, wodurch bei der Erfindung die geforderte Qualität und Langzeitstabilität der Verbindung zwischen Glas und Metalleinlage sichergestellt ist. Damit hat die vorliegende Erfindung jedoch den entscheidenden Vorteil, daß dauerhafter Schutz z.B. von Fahrzeuginsassen auch gegen einen Beschuß gewährleistet ist, der ausgerechnet im Randbereich der Panzerglasscheibe auftrifft.

Unter Polyurethan (PUR) ist hier allgemein ein PolyurethanSystem oder Polyurethan-Kunststoff zu verstehen, also z.B. ein thermoplastisches Polyurethan, ein Polyurethan-Kautschuck, ein PUR-Elastomer usw..

Die Metalleinlage kann aus mehreren Teilen bestehen, z.B. wenn die Panzerglasscheibe am Rand mehrere Abstufungen hat, oder kann einteilig ausgelegt sein. Als Metalleinlage wird bevorzugt Stahl bzw. ein Stahlblech verwendet. Die Metall- bzw. Stahleinlage ist streifenförmig.

Die Panzerglasscheibe kann stirnseitig oder am Rand je nach Anwendungsfall und in Anpassung an z.B. die konstruktive Auslegung des Karosserierahmens eines Kraftfahrzeugs, in dem die Panzerglasscheibe z.B. als Windschutzscheibe, Heckscheibe oder als Seitenfenster untergebracht wird, eine oder mehrere Abstufungen oder Ausnehmungen haben. Die Metalleinlage wird dann im Bereich der Abstufung mit Polyurethan befestigt, um in dem dann geringer dimensionierten Abstufungsbereich der Panzerglasscheibe einen Geschossdurchschlag zu verhindern.

Die erfindungsgemäße Panzerglasscheibe ist vorzugsweise an ihren freien Stirnflächen und an der freie Oberfläche der Metalleinlage im Bereich der Abstufung zumindest teilweise mit Polyurethan versiegelt. Auch diese Polyurethanversiegelung zeichnet sich durch eine hohe Qualität und Langzeitstabilität aus.

Die erfindungsgemäße Panzerglasscheibe kann eben oder gebogen sein, also einen gekrümmten Querschnitt haben, wie er im Automobilbau häufig auftritt. Die gebogenen Panzerglasscheiben haben ebenfalls entsprechend dem Glas eine oder mehrere gebogene oder gekrümmte Stahleinlagen, die mit Polyurethan an den vorgesehenen Glasflächen der Panzerglasscheibe dauerhaft befestigt sind. Insbesondere bei gekrümmten, aneinandergrenzenden Glasoberflächen und Stahleinlageoberflächen können auftretende, normalerweise zu große Abstände zwischen den Oberflächen mit Polyurethan als Befestigungsmittel ausgeglichen oder ausgefüllt werden.

Die Metalleinlage oder das Stahlblech kann mittels Polyurethan an einer Glasoberfläche der erfindungsgemäßen Panzerglasscheibe verschweißt sein.

Weitere Vorteile und Anwendungsmöglichkeiten der Erfindung sind der nachfolgenden Beschreibung einer Ausführungsform der Erfindung in Verbindung mit den Zeichnungen zu entnehmen. Es zeigen:
Figur 1 eine schematische, beschußseitige Ansicht einer beispielhaften Ausführungsform der erfindungsgemäßen Panzerglasscheibe, die als versenkbare Seitenscheibe in einem Kraftfahrzeug ausgelegt ist, wobei die Karosserie des Kraftfahrzeugs nur angedeutet ist; und
Figur 2 eine teilweise Schnittansicht der erfindungsgemäßen Panzerglasscheibe der Figur 1, entlang der Schnittlinie A-A der Figur 1 gesehen und gegenüber der Figur 1 vergrößert und gedreht dargestellt, wobei die Figur 2 insbesondere den Aufbau der Panzerglasscheibe am Rand verdeutlicht.

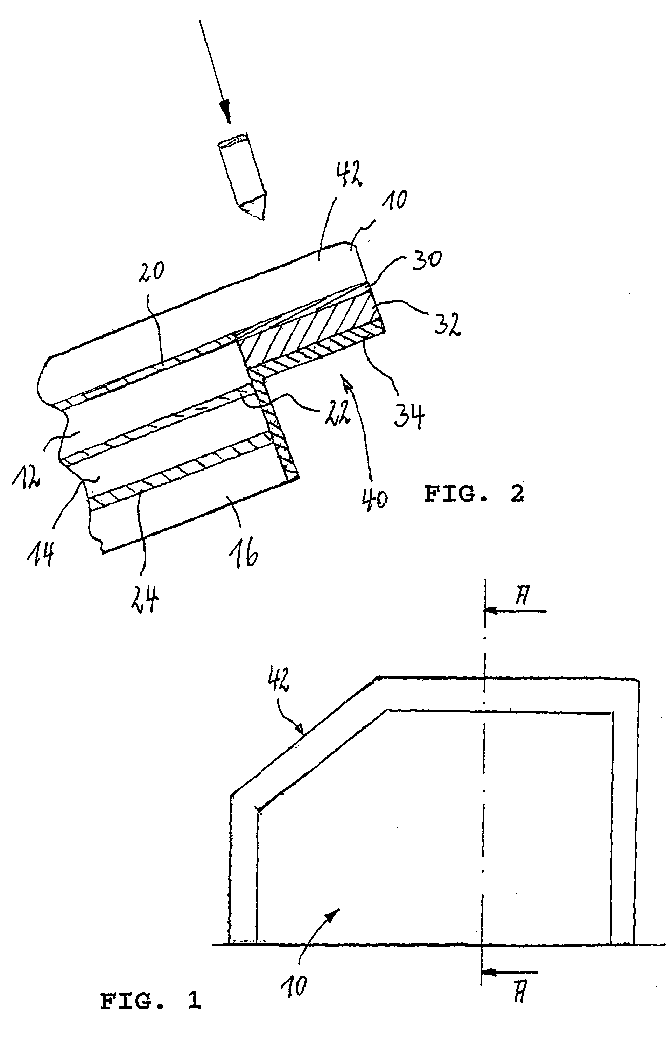

Die in den Figuren 1 und 2 gezeigte Ausführungsform der erfindungsgemäßen Panzerglasscheibe weist mehrere flächig und schichtweise aneinander befestigte Glasscheiben 10, 12, 14 und 16 auf. Die Glasscheiben 10 und 12 sind mittels einer PVB(Polyvinylbutyral)-Schicht 20 miteinander verbunden. Die Glasscheiben 12 und 14 und die Glasscheiben 14 und 16 sind durch die PVB-Schicht 22 bzw. die PVB-Schicht 24 miteinander verbunden. Die beschußseitig angeordnete Glasscheibe 10 (vgl. Pfeil mit eingezeichnetem Geschoß in der Figur 2) ist jedoch länger als die anderen Glasscheiben und ragt über die zueinander bündigen Stirnflächen der anderen Glasscheiben 12, 14 und 16 in einem Randbereich der gezeigten Panzerglasscheibe hinaus. Hierdurch bildet die Glasscheibe 10 einen Vorsprung 42 bzw. eine Abstufung 40 der Panzerglasscheibe aus.

An der gegenüber zur beschußseitigen Oberfläche liegenden Fläche des Vorsprungs 42 der Glasscheibe 10 ist ein streifenförmiges Stahlblech 32 mit rechteckigem Querschnitt als Metalleinlage oder Stahleinlage angeordnet, das sich entlag des gesamten abgestuften Randbereichs der gezeigten Panzerglasscheibe innerhalb der Abstufung 40 erstreckt. Das Stahlblech 32 deckt die angrenzende Fläche des Vorsprungs 42 vollständig ab und ist stirnflächig bündig mit der Glasscheibe 10. Das Stahlblech 32 ist über eine Schicht 30 aus Polyurethan mit der Glasscheibe 10 verbunden bzw. an dieser befestigt. Der Bereich zwischen dem Stahlblech 32 und den Stirnflächen der Glasscheiben 14 und 16 ist mit einer weiteren Polyurethanschicht 34 versiegelt.

Die Poyurethanschicht 30 kann z.B. aus einem thermoplastischen Polyurethan bestehen und kann beispielsweise in einem herkömmlichen one-shot-Verfahren oder einem Prepolymer-Verfahren auf entsprechend ausgelegten Anlagen durch geeignete Dosierung und Mischung von bekannten Ausgangskomponenten erzeugt werden. Die noch reaktive Polyurethanmischung wird einer Form oder einem Formwerkzeug zugeführt bzw. in dieses eingespritzt, in das die Panzerglasscheibe zumindest mit ihrem Randbereich und auch die Stahleinlage oder das Stahlblech 32 zueinander ausgerichtet eingelegt oder eingespannt sind. Das zwischen Stahlblech und Glasscheibe 10 eingespritzte reaktive Polyurethangemisch härtet reaktiv zu Polyurethan 30 aus, das das Stahlblech 32 oder die Metalleinlage zuverlässig an der Glasscheibe 10 befestigt. Die versiegelnde Polyurethanschicht 34 kann ebenfalls mit den zuvor erwähnten Verfahren hergestellt werden.

## Patentansprüche

1. Panzerglasscheibe zur Verwendung in einem Kraftfahrzeug mit mehreren schichtweise flächig miteinander verbundenen Glasscheiben (10, 12, 14, 16), wobei zumindest eine äußere Glasscheibe (10) über die weiter innen angeordneten Glasscheiben (12, 14, 16) mit einem Vorsprung (42) hervorsteht, um eine Abstufung (40) der Panzerglasscheibe in deren Randbereich auszubilden, und mit einer Metalleinlage (32) zum Schutz gegen außenseitigen Beschuß, **dadurch gekennzeichnet, daß** die Metalleinlage (32) als Streifen mit rechteckigem Querschnitt ausgebildet ist und an einer Innenfläche des Vorsprungs (42) mittels einer Polyurethanschicht (30) befestigt ist.

2. Panzerglasscheibe nach Anspruch 1, **dadurch gekennzeichnet, daß** die Metalleinlage (32) ein Stahlblech ist.

3. Panzerglasscheibe nach Anspruch 1 oder Anspruch 2, **dadurch gekennzeichnet, daß** die Stirnflächen der Glasscheiben (12, 14, 16) und freie Oberflächen der Metalleinlage (32) im Bereich der Abstufung (40) mit einer Polyurethanschicht (34) zumindest teilweise versiegelt sind.

4. Panzerglasscheibe nach einem der Ansprüche 1 bis 3, **dadurch gekennzeichnet, daß** die Panzerglasscheibe einen gekrümmten Querschnitt hat.

5. Panzerglasscheibe nach einem der vorstehenden Ansprüche, **dadurch gekennzeichnet, daß** die Metalleinlage (32) mittels der Polyurethanschicht (30) an der Glasoberfläche des Vorsprungs (42) verschweißt ist.

6. Panzerglasscheibe nach einem der vorstehenden Ansprüche, **dadurch gekennzeichnet, daß** die Polyurethanschicht (30) thermoplastisch ist.

7. Panzerglasscheibe nach einem der vorstehenden Ansprüche, **dadurch gekennzeichnet, daß** die Metalleinlage die Innenfläche des Vorsprungs (42) vollständig abdeckt und stirnseitig bündig mit der vorragenden Glasscheibe (10) ist.

8. Panzerglasscheibe nach einem der vorstehenden Ansprüche, **dadurch gekennzeichnet, daß** sie eine versenkbare Seitenscheibe eines Kraftfahrzeugs ist.

## Claims

1. Bulletproof glass window for use in a motor vehicle having several glass panes (10, 12, 14, 16), which are connected with each other with their surfaces in layers, wherein at least an outer glass pane (10) juts out over the other glass panes (12, 14, 16) with a projection (42) to form a grading (40) or a stepped portion of the bulletproof glass window in its marginal area, and a metal insert for protection against firing from outside,
**characterized in that** the metal insert (32) is formed as a strip that is rectangular in cross section and the metal insert (32) is fixed to an internal surface of the projection (42) by means of a polyurethane layer (30).

2. Bulletproof glass window according to claim 1, **characterized in that** the metal insert (32) is a steel sheet.

3. Bulletproof glass window according to claim 1 or claim 2, **characterized in that** the faces of the glass panes (12, 14, 16) and free surfaces of the metal insert (32) are, at least in part, sealed with a polyurethane layer (34) in the area of the grading (40) or the stepped portion.

4. Bulletproof glass window according to any of claims 1 to 3, **characterized in that** the bulletproof glass window has a curved cross section.

5. Bulletproof glass window according to any of the preceding claims, **characterized in that** the metal insert (32) is welded to the glass surface of the projection (42) by means of the polyurethane layer (30).

6. Bulletproof glass window according to any of the preceding claims, **characterized in that** the polyurethane layer (30) is made auf thermoplastic polyurethane.

7. Bulletproof glass window according to any of the preceding claims, **characterized in that** the metal insert (32) covers the internal surface of the projection (42) completely and is, on its face, even with the glass pane (10) jutting out.

8. Bulletproof glass window according to any of the preceding claims, **characterized in that** the bulletproof glass window is a lowerable side window in a motor vehicle.

## Revendications

1. Plaque de verre à l'épreuve des projectiles, destinée à être utilisée dans un véhicule automobile, comprenant plusieurs plaques de verre (10, 12, 14, 16) qui sont reliées l'une à l'autre par des liaisons surfaciques en formant des couches, au moins une plaque de verre (10) extérieure dépassant par une partie en saillie (42) des autres plaques de verre (12, 14, 16) disposées davantage vers l'intérieur pour former un gradin (40) de la plaque de verre à l'épreuve des projectiles dans sa zone de bord, et comprenant une pièce intercalaire métallique (32) pour la protection contre des tirs extérieurs, **caractérisée en ce que** la pièce intercalaire métallique (32) est une bande de section rectangulaire et est fixée au moyen d'une couche de polyuréthane (30) à une surface intérieure de la partie en saillie (42).

2. Plaque de verre à l'épreuve des projectiles selon la revendication 1, **caractérisée en ce que** la pièce intercalaire métallique (32) est une tôle en acier.

3. Plaque de verre selon la revendication 1 ou 2, **caractérisée en ce que** les surfaces frontales des plaques de verre (12, 14, 16) et les surfaces libres de la pièce intercalaire métallique (32) sont au moins partiellement plaquées d'une couche de polyuréthane dans la zone du gradin (40).

4. Plaque de verre à l'épreuve des projectiles selon l'une quelconque des revendications 1 à 3, **caractérisée en ce que** la plaque de verre à l'épreuve des projectiles a une section courbe.

5. Plaque de verre à l'épreuve des projectiles selon l'une quelconque des revendications précédentes, **caractérisée en ce que** la pièce intercalaire métallique (32) est soudée à la surface de verre de la partie en saillie (42) au moyen d'une couche de polyuréthane (30).

6. Plaque de verre à l'épreuve des projectiles selon l'une quelconque des revendications précédentes, **caractérisée en ce que** la couche de polyuréthane (30) est thermoplastique.

7. Plaque de verre à l'épreuve des projectiles selon l'une quelconque des revendications précédentes, **caractérisée en ce que** la pièce intercalaire métallique recouvre complètement la surface intérieure de la partie en saillie (42) et sa face frontale affleure la plaque de verre (10) en saillie.

8. Plaque de verre à l'épreuve des projectiles selon l'une quelconque des revendications précédentes, **caractérisée en ce qu'**elle est une fenêtre latérale descendante d'un véhicule automobile.
